# EUROPÄISCHE PATENTSCHRIFT

(11) **EP 0 587 615 B1**
(45) Veröffentlichungstag und Bekanntmachung des Hinweises auf die Patenterteilung: **17.09.1997**
(21) Anmeldenummer: 92910751.4
(22) Anmeldetag: 28.05.1992
(51) Int. Cl.: G11B 27/36, G11B 20/18, G11B 27/34, G11B 7/00

(54) **FEHLERARTSIGNALISATION OPTISCHER INFORMATIONSTRÄGER**
SIGNALIZATION OF TYPES OF DEFECTS OF AN OPTICAL INFORMATION CARRIER
SIGNALISATION DU TYPE DE DEFAUTS D'UN SUPPORT D'INFORMATION OPTIQUE

(30) Priorität: 07.06.1991 DE 4118672; 25.06.1991 DE 4120870; 28.03.1992 DE 4210264
(43) Veröffentlichungstag der Anmeldung: 23.03.1994
(60) Teilanmeldung: 95103711.8
(73) Patentinhaber: DEUTSCHE THOMSON-BRANDT GMBH, 78048 Villingen-Schwenningen (DE)
(72) Erfinder: KÜHN, Hans-Robert, D-7742 St. Georgen (DE); LÄUFER, Engelbert, D0-7742 St. Georgen (DE); RUTSCHMANN, Richard, D-7896 Wutöschingen (DE)
(86) Internationale Anmeldenummer: EP9201191
(87) Internationale Veröffentlichungsnummer: WO9222064

(56) Entgegenhaltungen:
- EP-A- 0 073 519
- EP-A- 0 144 831
- EP-A- 0 302 507
- DE-A- 2 851 822
- DE-A- 4 029 220
- GB-A- 2 137 799
- US-A- 4 287 587
- PATENT ABSTRACTS OF JAPAN vol. 8, no. 275 (P-321)(1712) 15. Dezember 1984
- PATENT ABSTRACTS OF JAPAN vol. 13, no. 517 (P-962)20. November 1989
- ELEKTOR ELECTRONICS. Bd. 15, Nr. 171, Oktober 1989, CANTERBURY GB Seiten 12 - 15; GIFFARD: 'CD ERROR DETECTOR'
- IBM TECHNICAL DISCLOSURE BULLETIN. Bd. 31, Nr. 8, Januar 1989, NEW YORK US Seiten 128 - 130; 'MULTI-THRESHOLD SURFACE ANALYSIS TESTER'
- PATENT ABSTRACTS OF JAPAN vol. 9, no. 289 (P-405)(2012) 15. November 1985

## Beschreibung

Die Erfindung betrifft ein Verfahren und eine Anordnung zur Fehlerartsignalisation optischer Informationsträger mit einem Wiedergabegerät im Sinne einer "Fuzzy Logic", die nicht nur das Vorhandensein eines Fehlers, sondern die Art des Fehlers, wie zum Beispiel Fingerabdrücke auf einer Compact Disc, signalisiert und es dadurch dem Verbraucher gegebenenfalls ermöglicht, die ursprüngliche Wiedergabequalität des optischen Informationsträgers wieder herzustellen. Das Gebiet, dem die Erfindung zuzuordnen ist, betrifft das Signalisieren mindestens einer Fehlerart optischer Informationsträger, wie sie bei fahrlässigem Umgang mit der Compact Disc (CD), Laserdisc oder ähnlichen Informationsträgern auftreten, wobei das üblicherweise zur Wiedergabe der Information vorgesehene Abspielgerät verwendet wird.

Trotz größter Sorgfalt weisen zur Aufzeichnung und Wiedergabe von Audio- und/oder Videosignalen oder Datensignalen verwendete optische Informationsträger sowohl herstellungs- als auch umweltbedingte Fehler auf, die in gewissem Umfang mit einer Fehlerkorrektureinrichtung von den Abspielgeräten korrigiert bzw. interpoliert werden. Ohne diese Fähigkeit wären die Compact Disc oder Laserdisc nicht realisierbar, da dann keines der vielen Bits verlorengehen beziehungsweise keiner der unzähligen Pits in der Scheibe verschmiert oder verdeckt werden dürfte. Fehler des optischen Informationsträgers können jedoch zumindest die Originalität der Wiedergabe beeinflussen oder führen zu Ausfällen bei der Wiedergabe. Es treten sowohl zufällige Einzelfehler, wie Luftbläschen oder Verschmutzungen in der Schutzschicht des optischen Informationsträgers, als auch sogenannte Flächenfehler, also Kratzer und Fingerabdrücke auf, die sehr viele Informationen zerstören oder verdecken, so daß der Verbraucher nicht mehr unterscheiden kann, ob ursprüngliche oder berechnete beziehungsweise interpolierte Informationen wiedergegeben werden.

Zur Anzeige der technischen Qualität einer gerade gespielten CD ist ein Fehleranzeigegerät bekannt, das die Auslastung der Fehlerkorrektur anzeigt, vgl. KRIEG, Bernhard: Praxis der digitalen Audiotechnik: digitale Aufnahme und Wiedergabe, Franzis-Verlag GmbH, München 1989, S. 60 - 63. Die Auslastung der Fehlerkorrektur ist ein Spiegelbild des Fehlergrades des optischen Informationsträgers, den der im Abspielgerät vorhandene Program-Counter signalisiert. Der Fehlergrad repräsentiert sowohl die Häufigkeit als auch die Anzahl der Fehler. Obwohl er ein direktes Indiz für die technische Qualität einer gerade gespielten CD ist, erhält der Verbraucher keinen Aufschluß über gegebenenfalls notwendige Maßnahmen zum Verringern des Fehlergrades, da zwar die Häufigkeit und Anzahl der Fehler, jedoch nicht die Art des Fehlers signalisiert wird.
Die Fehlerartsignalisierung erfordert somit ein in der Komplexität über den Fehlergrad hinausgehendes System. Es ist allgemein bekannt, derartige Systeme die den Menschen als Entscheidungsträger gewichteter komplexer Probleme unterstützen, als "Fuzzy Logic" zu bezeichnen.

Es ist weiterhin bekannt, daß bei der CD-Herstellung Laser-Scanner zur optischen Inspektion der Informationsträger verwendet werden, die einen hohen Aufwand erfordern und mit denen im Rahmen einer Gütekontrolle mit einem automatischen Prüfsystem eine Gut/Schlecht-Sortierung der CDs erfolgt, vgl. "Wenn es klickt, nicht gleich den Spieler schelten", in: Frankfurter Allgemeine Zeitung vom 07.01.1992. Als Prüfkriterium dient ebenfalls der Fehlergrad, der die Anzahl der Störereignisse auf der Platte repräsentiert. Ein derartig aufwendiges System zur Fehlersignalisierung des optischen Informationsträgers in Form eines Zusatzgerätes ist dem Verbraucher jedoch nicht zuzumuten. Es sei erwähnt, daß mit diesen Einrichtungen auch keine Unterscheidung zwischen den unterschiedlichen Fehlerarten erfolgen kann.

Aus der GB-A-2 137 799 ist ein Schmutzerkennungs- und Anzeigesystem für Informationsauslesesysteme bekannt. Hierbei wird eine abnormale Bedingung des Auslesesignals detektiert und angezeigt. Allerdings kann auch mit diesem bekannten System nur allgemein auf das Vorhandensein eines Fehlers hingewiesen werden, eine Aussage über die Fehlerart ist nicht möglich.

Die US-A-4,287,587 zeigt einen Detektor für ein Videodisk-Abspielsystem, welcher ein von der Videodisk erhaltenes Signal dahingehend prüft, ob dessen Amplitude mit zunehmender Spielzeit abnimmt. Eine Aussage über die Fehlerart eines Fehlers der Videodisk ist nicht möglich.

Weiterhin ist ein Verfahren zur Fehlerermittlung bei auf scheibenförmigen, rotierenden Informationsträgern in Spiralspuren eingespeicherten Signalen bekannt, bei dem ein Fehlersignal durch Vergleich mit dem Signal inhalt vorhergehender Umdrehungen in der Weise identifiziert wird, daß bei einer Wiederholung des Fehlersignals in der nächstfolgenden Umdrehungen eine Schramme und ohne Wiederholung ein Einzelfehler registriert wird, vgl. DE-OS 28 51 822. Zur Durchführung des Verfahrens ist ein Schieberegister von der Länge einer Umdrehung vorgesehen. Räumlich begrenzte Fehler werden auf irgendeine spezifische Weise elektronisch gefunden und als Impulssignal an den Eingang der Einrichtung gegeben. Das Verfahren beruht darauf, daß ein Fehlersignal mit dem Signal inhalt vorhergehender Umdrehungen verglichen wird. Es wird eine Wiederholung des Fehlersignals in radialer Richtung am gleichen Ort in der nächsten Umdrehung mit einem Schieberegister registriert. Dadurch führen nur Fehler bzw. Fehlersignale, die auf einer geradlinig radial verlaufenden Linie des Aufzeichungsträgers auftreten, zum Signalisieren einer Schramme. Die Tatsache, daß Schrammen oder Kratzer jedoch einen Verlauf aufweisen, der in aller Regel nicht mit einer geradlinig radial verlaufenden Linie übereinstimmt, wird nicht berücksichtigt. Das elektronische Fehlersignal wird in ein Schieberegister mit einer Länge von exakt einem Umlauf eingeschrieben, so daß nur auf einer geraden Radiallinie befindliche Orte erfaßt werden.
Zur Ortsbestimmung wird ein bei Abspielgeräten für scheibenförmige, rotierende Informationsträger unüblicher, starr an der Antriebsachse des Informationsträgers angebrachter Impulsgeber verwendet.

Der Erfindung liegt deshalb die Aufgabe zugrunde, ein Verfahren und eine Anordnung zu schaffen, die mit geringem Aufwand das Signalisieren mindestens einer Fehlerart eines optischen Aufzeichnungsträgers, wie beispielsweise Fingerabdrücke, mit einem Wiedergabegerät ermöglicht, so daß dem Verbraucher mit dem Beratungs- beziehungsweise Signalisiersystem das Beurteilen der Qualität des optischen Aufzeichnungsträgers erleichtert und ein Hinweis zum Erreichen einer besseren Wiedergabequalität beim Vorliegen der Fehlerursache Fingerabdruck gegeben wird. Das Verfahren ist im Anspruch 1 und die Anordnung ist im Anspruch 4 definiert.

Die gestellte Aufgabe wird erfindungsgemäß dadurch gelöst, daß in einem ersten Verfahrensschritt mindestens eine Fehlerursache beziehungsweise Fehlerart ermittelt und in einem zweiten Verfahrensschritt signalisiert beziehungsweise angezeigt wird.

Sofern der gerade abgespielte optische Informationsträger einen Fehler aufweist, wird explizit mindestens eine Fehlerursache angezeigt, so daß der Verbraucher im Fall der Fehlerursache Fingerabdruck durch einfaches Abwischen der Fingerabdrücke, vorzugsweise geradlinig von der Mitte zum Rand, die ursprüngliche Wiedergabequalität wieder herstellen kann.

Ausgangspunkt des Verfahrens bildet der optische Informationsträger, der insbesondere durch mehrfache und fahrlässige Handhabung zunehmend Fehler aufweist und mit einem üblicher weise zur Wiedergabe der Informationen verwendeten Abspielgerät optisch abgetastet wird.

Zum Ermitteln mindestens einer Fehlerursache wird das vom optischen Informationsträger mit dem Abspielgerät detektierte Hochfrequenzsignal verwendet. Vom Hochfrequenzsignal wird hierzu ein Meßsignal abgeleitet, dessen Auftreten innerhalb eines oberen und eines unteren Schwellwertes über einen die Fehlerursache kennzeichnenden Zeitbereich festgestellt wird. Als Schwellwerte zum Ermitteln der Fehlerursache werden vorzugsweise 10 und 90 % des Hochfrequenzsignals verwendet, wobei die Schwellwerte auf obere und untere Spitzenwerte des Hochfrequenzsignals bezogen werden, um insbesondere Toleranzen der Abtaster und der Reflexionseigenschaften unterschiedlicher optischer Informationsträger auszugleichen.

Damit das Meßsignal hinsichtlich ebenfalls vom Hochfrequenzsignal abgeleiteter Schwellwerte ausgewertet werden kann, werden Schwellwerte mit einer gegenüber dem Meßsignal wesentlich größeren Zeitkonstanten verwendet.

Zum Abspielen des optischen Informationsträgers mit erhöhter Geschwindigkeit, wie beispielsweise dem Überspielen der optischen Platte auf ein Band mit dem sogenannten high speed dubbing oder für einen Suchvorgang nach Fehlerursachen mit wesentlich verkürzter Abspielzeit ist es vorteilhaft, Schwellwerte mit einer geringeren Zeitkonstanten zu verwenden, da Beeinträchtigungen anderenfalls erst beim Abspielen mit normaler Abspielgeschwindigkeit festgestellt werden.

Der Zeitbereich, der die Fehlerursache Fingerabdruck kennzeichnet, ist vorzugsweise eine Zeitdauer ab 4 ms, in der das vom Hochfrequenzsignal abgeleitete Meßsignal innerhalb der Schwellwerte auftritt. Durch Änderung der Schwellwerte, der Zeitkonstanten der Schwellwerte und des Zeitbereiches können neben der Fehlerursache Fingerabdruck auch andere Fehlerursachen ermittelt werden. Darüber hinaus ist es sowohl mit der vom Fehlergrad als auch mit der vom Hochfrequenzsignal ausgehenden Lösung durch Variieren der Parameter und gegebenenfalls Kombination der Lösungen möglich, unterschiedliche Fehlerursachen zu ermittelt und eine Wichtung des Grades der Fehlerursache oder Fehlerursachen vorzunehmen. Dem Verbraucher wird beispielsweise signalisiert, ob es sich um leichte Fingerabdrücke, starke Fingerabdrücke oder um eine hörbar durch Fingerabdrücke oder eine andere Fehlerursache gestörte Wiedergabe handelt.

Um den Grad der Sicherheit der Identifikation von Fingerabdrücken gegenüber anderen Störungen zu erhöhen, wird das Fehler repräsentierende Signal vorzugsweise mit einem dem Plattenumlauf äquivalenten Signal verknüpft. Dadurch wird vermieden, daß sich mehrere kurze Störungen, die nicht von Fingerabdrücken herrühren, zu einem dem Signal Fingerabdruck entsprechenden Signal addieren. Das dem Plattenumlauf äquivalente Signal ist vorzugsweise das Ausgangssignal des sogenannten Radial-Detektors. Weiterhin ist es vorteilhaft den Vorgang der Summierung einer festgelegten Anzahl von Track-Absolvierungen zum Detektieren der radialen Ausdehnung von Fingerabdrücken nicht bereits abzubrechen, wenn im Rahmen der Zählung ein einzelner Track-Umlauf frei von Störsignalen ist.

Das Anzeigen einer Fehlerursache oder mehrerer Fehlerursachen erfolgt visuell und/oder akustisch. Um zu gewährleisten, daß der Bedienende die Fehleranzeige wahrnimmt, wird die Fehlerursache auch über den Zeitraum ihres Auftretens hinausgehend signalisiert.

Zur Durchführung des Verfahrens ist ein Gerät nach Anspruch 4 vorgesehen, welches eine Anordnung aufweist, die aus einer Verarbeitungsschaltung zur Verarbeitung Fehler eines optischen Informationsträgers repräsentierender Signale des Abspielgerätes und zur Zuführung zu einer Anzeigevorrichtung für mindestens eine Fehlerursache besteht.

Eine Verarbeitungsschaltung, die der Verarbeitung von der optischen Platte mit dem Abspielgerät detektierter Hochfrequenzsignale dient, wird vorzugsweise am Abtaster des Abspielgerätes angeschlossen und besteht aus einer einen oberen Schwellwert und einen unteren Schwellwert des Hochfrequenzsignals bereitstellenden Schwellwertschaltung, mit der ein aus dem Hochfrequenzsignal abgeleitetes Meßsignal innerhalb der Schwellwerte erfaßt wird und aus einem Zeitglied, mit dem die Zeitdauer beziehungsweise die Aufenthaltsdauer des Meßsignals innerhalb der Schwellwerte festgestellt wird.

Die Schwellwertschaltung besteht vorzugsweise aus zwei entgegengesetzt gerichteten ersten Spitzenwertgleichrichtern, die über einen Spannungsteiler miteinander verbunden sind, an dem zwei Komparatoren angeschlossen sind, die eingangsseitig mit einem das Meßsignal bereitstellenden zweiten Spitzengleichrichter und ausgangsseitig mit dem Eingang eines Gatters verbunden sind.

Die Spitzenwertgleichrichter bestehen jeweils aus einer Diode, einem Kondensator und einer Konstantstromquelle oder mindestens einem Widerstand in Verbindung mit einer Diode und einem Kondensator. Die ersten Spitzenwertgleichrichter weisen dabei eine im Vergleich zum zweiten Spitzenwertgleichrichter wesentlich größere Zeitkonstante auf, um Schwellwerte für das vom Hochfrequenzsignal abgeleitete Meßsignal bereitzustellen. Die Zeitkonstante der ersten Spitzenwertgleichrichter beträgt vorzugsweise 200 ms, während die Zeitkonstante des zweiten Spitzenwertgleichrichters einen Wert im Bereich von 2 ms aufweist. Als Schwellwerte, die mit dem die Spitzenwertgleichrichter verbindenden Spannungsteiler gebildet werden, werden vorzugsweise 10 % und 90 % des Hochfrequenzsignals verwendet und Komparatoren als Vergleichswert zugeführt. Diesen Komparatoren wird ebenfalls das vom Hochfrequenzsignal abgeleitete Meßsignal zugeführt, so daß aufgrund der unterschiedlichen Zeitkonstanten ein Auftreten des Meßsignals innerhalb der Schwellwerte ermittelt und durch die Verknüpfung der Ausgänge der Komparatoren über ein Gatter signalisiert wird.

Da Fingerabdrücke im Gegensatz zu den sogenannten Black-Dots sich im Hochfrequenzsignal nicht als vollständige Einbrüche der Spannung des Hochfrequenzsignals widerspiegeln, wird bereits dadurch eine Unterscheidung zwischen diesen Fehlerursachen möglich.

Da ein optischer Informationsträger jedoch auch Kratzer aufweisen kann, die sich im Hochfrequenzsignal analog zur Fehlerursache Fingerabdruck als Meßsignal innerhalb der Schwellwerte widerspiegeln, ist eine weitergehende Auswertung des Meßsignals erforderlich. Hierzu ist ein am Gatter angeschlossenes Zeitglied vorgesehen, mit dem die Zeitdauer des Auftretens des Meßsignals innerhalb der Schwellwerte festgestellt und bewertet wird. Da die örtliche Ausdehnung von Fingerabdrücken größer als die von Kratzern ist, wird die Zeitdauer der Dämpfung oder von Einbrüchen des Hochfrequenzbeziehungsweise Meßsignals als zusätzliches Kriterium zum Unterscheiden von Fehlerursachen verwendet. Als Zeitglied ist ein entsprechender Schaltkreis oder ein Integrator mit nachgeschaltetem Komparator geeignet, dessen Ausgang vorzugsweise beim Auftreten des Meßsignals innerhalb der Schwellwerte ab einer Zeitdauer von 4 ms ein Ausgangssignal bereitstellt, das zum Ermitteln der Fehlerursache Fingerabdruck verwendet wird.

Um sicherzustellen, daß die Fehleranzeige vom Betreiber des Abspielgerätes infolge der meist nur geringen Dauer des Auftretens von Fehlern auch wahrgenommen wird, ist dem Komparator ein Monoflop und/oder ein rückstellbarer Speicher nachgeschaltet. Dadurch wird eine über den Zeitraum des Auftretens einer Fehlerursache hinausgehende Anzeige erreicht. Weiterhin ist diese Art der Anzeige im Zusammenhang mit sogenannten Wechslern oder Magazinabspielgeräten vorteilhaft, da die Information über eine fehlerhafte optische Platte gegebenenfalls bis zum Einlegen eines neuen Magazins erfolgt, mit dem dann ein Rückstellen der Speicher vorgenommen wird.

Es ist weiterhin vorgesehen, die Spitzenwertgleichrichter auf andere Zeitkonstanten umschaltbar auszuführen, um die Wirksamkeit der Fehlerursachenanzeige auch beim Abspielen mit erhöhter Geschwindigkeit zu gewährleisten, wie es beispielsweise zum Überspielen mit dem sogenannten high speed dubbing erforderlich ist. Da bei dieser Art des Überspielens in der Regel nicht mitgehört wird, könnten anderenfalls Fehler erst beim Abspielen mit normaler Geschwindigkeit bemerkt werden. Eine derartige Zeitkonstantenumschaltung ist auch für einen sogenannten Suchvorgang erforderlich, bei dem die optische Platte mit wesentlich verkürzter Abspielzeit hinsichtlich des Auftretens von Fehlern untersucht wird.

Durch Verändern der Parameter der Anordnung können auch andere Fehlerursachen als die Fehlerursache Fingerabdruck ermittelt und eine Anpassung an den Informationsträger vorgenommen werden. Darüber hinaus ist die Anordnung geeignet, um eine Bewertung einer Fehlerursache hinsichtlich ihrer Intensität vorzunehmen.

Unabhängig vom Aufbau der Verarbeitungsschaltung, mit der mindestens eine Fehlerursache ermittelt wird, ist eine visuell und/oder akustisch signalisierende Anzeigevorrichtung vorgesehen, die aus einer oder mehreren Leuchtdioden, einem Display oder Anzeigefeldern oder einer ein oder mehrere Tonsignale erzeugenden Tonrufeinrichtung besteht. Mit der Anzeigevorrichtung werden vorzugsweise reparable Fehlerursachen oder auch reparable und/oder irreparable Fehlerursachen angezeigt.

Hinsichtlich der Gerätegestaltung werden die Anzeigevorrichtung und die Verarbeitungsschaltung zu einem Fehleranzeigegerät zusammengefügt, welches als separates Fehleranzeigegerät mit dem Abspielgerät verbunden ist oder das Fehleranzeigegerät ist im Abspielgerät integriert und bildet mit diesem eine bauliche Einheit.

Die Vorteile des Verfahrens und der Anordnung bestehen insbesondere darin, daß dem Betreiber des Abspielgerätes das Beurteilen der Wiedergabequalität eines optischen Informationsträgers erleichtert wird, hierzu im Abspielgerät vorhandene Einrichtungen und bereits realisierte Verfahrensschritte verwendet werden können und der Verbraucher eine explizite Information über gegebenenfalls vorhandene Fehlerursachen des gerade abgespielten optischen Informationsträgers erhält, die es ihm im Fall von Fingerabdrücken ermöglicht, durch einfaches Abwischen die ursprüngliche Wiedergabequalität des optischen Informationsträgers wieder herzustellen.

Das Verfahren und die Anordnung sind mit geringem Aufwand realisierbar und der Verbraucher erhält Aufschlüsse darüber, ob ursprüngliche oder wesentlich mit einem Korrektursystem berechnete beziehungsweise interpolierte Informationen wiedergegeben werden.

Im folgenden wird die Erfindung anhand von einen Ausführungsweg darstellenden Zeichnungen näher erläutert.

Es zeigen
- Fig. 1: ein Blockschaltbild zur Durchführung des Verfahrens zur Fehlerartsignalisation optischer Informationsträger mit einem Abspielgerät 1,
- Fig. 2: ein Blockschaltbild einer Anordnung zur vom Hochfrequenzsignal RF ausgehenden Fehlerartanzei ge,
- Fig. 3: schematisch dargestellte Signalverläufe zum Verfahren und zur Anordnung zum vom Hochfrequenz signal RF des Abspielgerätes 1 ausgehenden Signa lisieren der Fehlerursache,
- Fig. 4: eine Anordnung zur vom Hochfrequenzsignal RF ausgehenden Fehlerartanzeige,

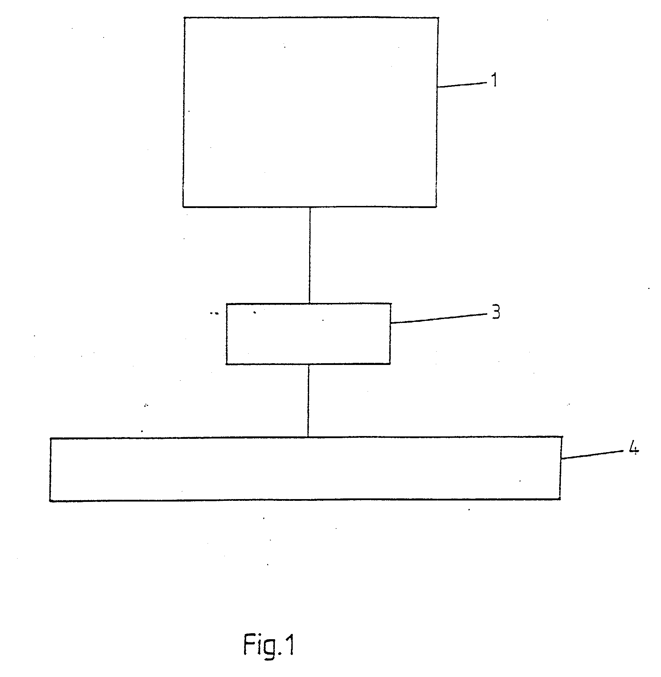

Fig. 1 entsprechend wird das Verfahren zur Fehlerartsignalisation optischer Informationsträger mit einem Abspielgerät 1, mit dem im ersten Verfahrensschritt mindestens eine Fehlerursache ermittelt und im zweiten Verfahrensschritt angezeigt wird, mit einer Verarbeitungsschaltung 3 und einer Anzeigevorrichtung 4 durchgeführt.

Um den Grad der Sicherheit der Identifikation von Fingerabdrücken gegenüber anderen Störungen zu erhöhen, wird das Fehler repräsentierende Signal mit einem dem Plattenumlauf äquivalenten Signal verknüpft. Dadurch wird vermieden, daß sich mehrere kurze Störungen, die nicht von Fingerabdrücken herrühren, zu einem Fingerabdruck entsprechenden Signal addieren. Als einem Plattenumlauf äquivalentes Signal wird vorzugsweise das Ausgangssignal des sogenannten Radial-Detektors verwendet. Anderseits ist es vorteilhaft, den Vorgang der Summierung einer festgelegten Anzahl von Track-Absolvierungen entsprechend der Plattenumläufe zum Detektieren der radialen Ausdehnung von Fingerabdrücken nicht bereits abzubrechen, wenn im Rahmen der Zählung ein einzelner Track-Umlauf frei von Störsignalen ist.

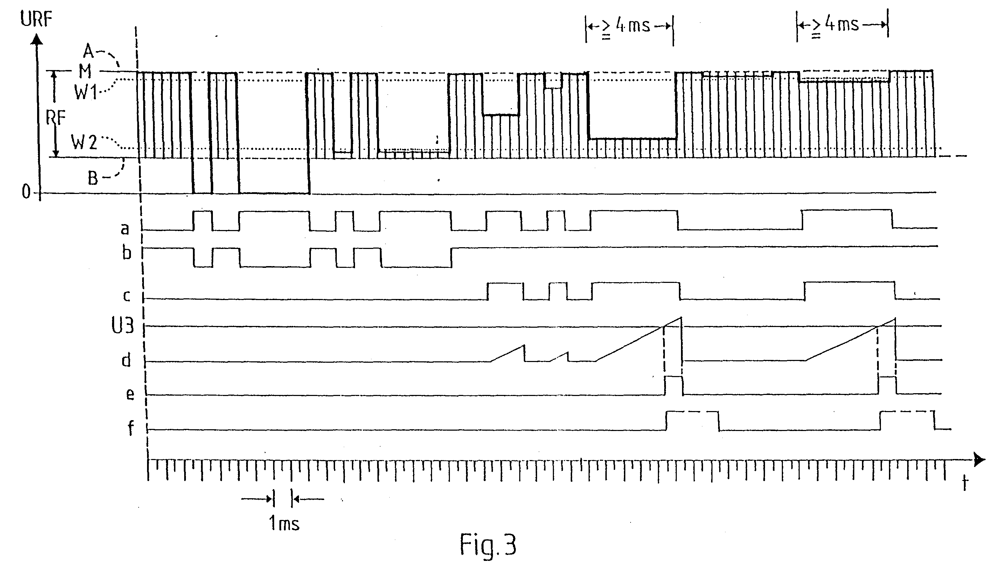

Der erste Verfahrensschritt besteht darin, daß aus dem von der optischen Platte mit dem Abspielgerät 1 detektierten Hochfrequenzsignal RF mindestens die Fehlerursache Fingerabdruck ermittelt wird. Zur Erläuterung des Verfahrens ist in Fig. 3 ein Hochfrequenzsignal RF schematisch dargestellt, in welchem die wesentlichen Fehlerursachen angegeben sind. Es wurde herausgefunden, daß beim Vorliegen der Fehlerursache Black-Dot die Spannung URF des Hochfrequenzsignals RF erhebliche Einbrüche aufweist, die sich von Null bis annähernd 10 % des Hochfrequenzsignals RF erstrecken. Diese Einbrüche können, wie im Signalverlauf dargestellt, unterschiedliche Einbruchtiefen und Einbruchlängen aufweisen.

Die Fehlerursache Kratzer führt zu Einbrüchen der Spannung URF des Hochfrequenzsignals RF, die durch eine geringere Einbruchtiefe und überwiegend auch eine geringere Einbruchlänge gekennzeichnet sind.

Fingerabdrücke führen aufgrund ihrer Ausdehnung auf der optischen Platte zu Einbrüchen der Spannung URF des Hochfrequenzsignals RF mit einer Einbruchlänge beziehungsweise Zeitdauer ab 4 ms. Die Stärke des Fingerabdruckes entspricht dabei der Einbruchtiefe. Da sehr leichte Fingerabdrücke die Wiedergabequalität der optischen Platte nicht beeinflussen, können sie unberücksichtigt bleiben. Ausgehend von diesen gewonnenen Erkenntnissen wird aus dem Hochfrequenzsignal RF ein Meßsignal M abgeleitet und beim Auftreten des Meßsignals M innerhalb eines oberen Schwellwertes W1, der als 90 % des Hochfrequenzsignals RF festgelegt wurde, und eines unteren Schwellwertes W2, der 10 % des Hochfrequenzsignals RF entspricht, in einem Zeitbereich mit einer Zeitdauer ab 4 ms die Fehlerursache Fingerabdruck ermittelt.

Durch das Beziehen der Schwellwerte W1, W2 auf Spitzenwerte A, B des Hochfrequenzsignals RF wird eine Unabhängigkeit von der absoluten Spannung URF des Hochfrequenzsignals RF erreicht, die gerätespezifisch und von der Qualität der Reflexionsschicht der optischen Platte abhängig ist. Um das Meßsignal M in Bezug auf die ebenfalls aus dem Hochfrequenzsignal RF abgeleiteten Schwellwerte W1, W2 auswerten zu können, wurde deren Zeitkonstante im Vergleich zur Zeitkonstante des Meßsignals M wesentlich größer gewählt. Die Zeitkonstante der Schwellwerte W1, W2 Beträgt 200 ms und die des Meßsignals 2 ms.

Unabhängig vom Ausführungsweg des ersten Verfahrensschrittes wird dann mit der bereits erwähnten Anzeigevorrichtung 4 in einem zweiten Verfahrensschritt mindestens eine Fehlerursache signalisiert.

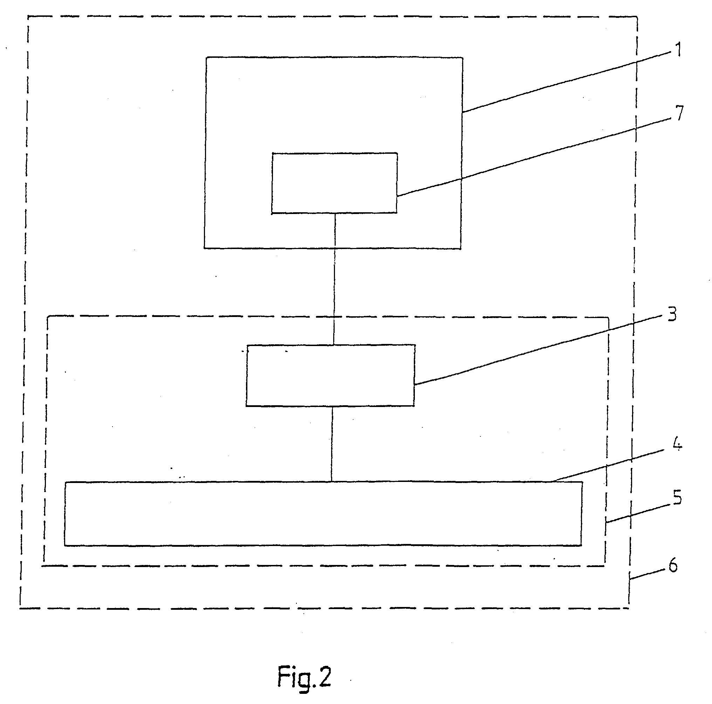

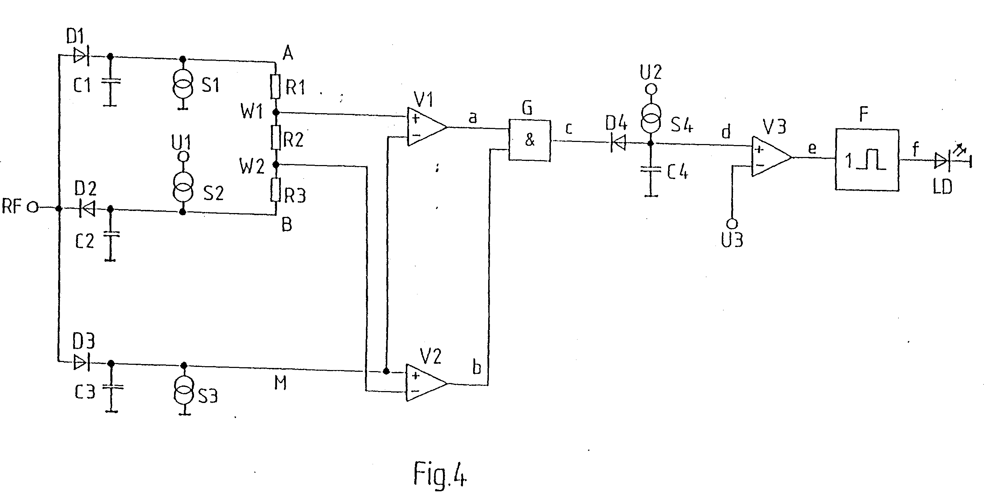

Zum Realisieren des vom Hochfrequenzsignal RF ausgehenden Ausführungsweges ist eine Fig. 4 entsprechende Anordnung vorgesehen, deren Blockschaltbild in Fig. 2 dargestellt ist. Dieses Blockschaltbild weist eine Anordnung auf, die aus dem Abspielgerät 1, das einen den Fehlergrad der optischen Platte signalisierenden Decoder 2 enthält, einer Verarbeitungsschaltung 3 und einer Anzeigevorrichtung 4 besteht. Am Decoder 2 ist die Verarbeitungsschaltung 3 angeschlossen, mit der die den Fehlergrad der gerade gespielten optischen Platte repräsentierenden Signale verarbeitet werden. An die Verarbeitungsschaltung 3 ist eine in diesem Fall auf die Fehlerursache Fingerabdruck beschränkte Anzeigevorrichtung 4 angeschlossen. Die Verarbeitungsschaltung 3 ist gleichfalls mit dem Abspielgerät 1 verbunden und bei diesem Ausführungsweg am, das Hochfrequenzsignal RF von der optischen Platte detektierenden Abtaster 7 des Abspielgerätes 1 angeschlossen. Sie bildet mit der Anzeigevorrichtung 4 das Fehleranzeigegerät 5, dessen innerer Aufbau in der Fig. 4 entsprechenden Anordnung dargestellt ist. Diese besteht aus drei Spitzenwertgleichrichtern D1, C1, S1; D2, C2, S2; D3, C3, S3, die jeweils eine Diode D1, D2, D3, einen Kondensator C1, C2, C3 und eine Konstantstromquelle S1, S2, S3 aufweisen.

Die Konstantstromquellen S1, S2, S3 sind der Richtung der Dioden D1, D2, D3 entsprechend mit einer Masseleitung oder einer Versorgungsspannungsleitung U1 verbunden und die Kondensatoren C1, C2, C3 sind an der Masseleitung angeschlossen.

Die Dioden D1, D2 der zwei ersten Spitzenwertgleichrichter D1, C1, S1; D2, C2, S2 sind entgegengesetzt gerichtet und gemeinsam mit der Diode D3 des zweiten Spitzenwertgleichrichters D3, C3, S3 am das Hochfrequenzsignal RF bereitstellenden Abtaster 7 angeschossen. Die Richtung der Diode D3 des zweiten Spitzenwertgleichrichters D3, C3, S3, mit dem von dem Hochfrequenzsignal RF das Meßsignal M abgeleitet wird, entspricht der Phasenlage des Hochfrequenzsignals RF und am zweiten Spitzenwertgleichrichter D3, C3, S3 sind zwei erste Komparatoren V1, V2 angeschlossen, deren Vergleichseingänge mit dem Spannungsteiler R1, R2, R3 verbunden sind, der die ersten Spitzenwertgleichrichter D1, C1, S1; D2, C2, S3 miteinander verbindet und auf obere und untere Spitzenwerte A, B des Hochfrequenzsignal RF bezogene Schwellwerte W1, W2 bereitstellt, die 10 % beziehungsweise 90 % des Hochfrequenzsignals RF betragen. Mit den zwei ersten Komparatoren V1, V2 wird das Über- beziehungsweise Unterschreiten der Schwellwerte W1, W2 durch das Meßsignal M festgestellt. Die Ausgangssignale a, b der zwei ersten Komparatoren V1, V2 für den Fehlerursachen entsprechende Meßsignale M sind in Fig. 3 dargestellt. Durch Verknüpfen der Ausgangsignale a, b der zwei ersten Komparatoren V1, V2 über ein an den Komparatoren V1, V2 angeschlossenes Und-Gatter G wird ein Signal c bereitgestellt, wenn das Meßsignal M einen Wert innerhalb der Schwellwerte W1, W2 aufweist.

Da zusätzlich eine Zeitbewertung des Ausgangsignals M vorzunehmen ist, ist am Ausgang des Gatters G ein Zeitglied angeschlossen, das von einem Integrator mit nachgeschaltetem Komparator V3 gebildet wird. Der Integrator besteht aus einer Diode D4, einer Konstantstromquelle S4, die an einer Versorgungsspannung U2 angeschlossen ist, und einem Kondensator C4. Dem Signal c des Gatters G entsprechend wird ein Integrationssignal d, das ebenfalls in Fig. 3 dargestellt ist, bereitgestellt und dem Komparator V3 zum Vergleich mit der Referenzspannung U3 zugeführt, so daß am Ausgang des Komparators V3 durch die mit der Referenzspannung U 3 festgelegte Zeitdauer von 4 ms das Fehlersignal, welches die Fehlerursache Fingerabdruck kennzeichnet, abgegeben wird.

Um zu gewährleisten, daß das relativ kurzzeitig auftretende Fehlersignal e vom Betreiber des Abspielgerätes 1 wahrgenommen wird, ist am Komparator V3 ein Monoflop F zur Impulsverlängerung angeschlossen, dessen Anzeigesignal f ebenfalls in Fig. 3 dargestellt ist und einer Lichtemitterdiode LD zugeführt wird, die die Fehlerursache Fingerabdruck visuell anzeigt. Dieses, vom Hochfrequenzsignal RF ausgehende Fehleranzeigegerät 5, kann analog zu einem vom Fehlergrad ausgehenden Fehleranzeigegerät 5, das ebenfalls aus einer Verarbeitungsschaltung 3 und einer Anzeigevorrichtung 4 besteht, den Figuren 5 und 6 entsprechend mit dem Abspielgerät 1 zu einer baulichen Einheit 6 zusammengefaßt sein.

## Patentansprüche

1. Verfahren zum Signalisieren von mindestens einer Fehlerursache optisch abtastbarer Informationsträger beziehungsweise optischer Platten, wie beispielsweise Fingerabdrücke und/oder Kratzer, wobei in einem ersten Verfahrensschritt eine bestimmte Anomalie im reproduzierten Hochfrequenzsignal festgestellt wird, indem in einem üblicherweise zur Wiedergabe der Information einer Compact Disc verwendeten Abspielgerät (1) mindestens eine Fehlerursache, z.B. Fingerabdruck, aus einem vom optischen Informationsträger mit dem Abspielgerät (1) detektierten Hochfrequenzsignal (RF) ein der Amplitude des Hochfrequenzsignals (RF) entsprechendes Meßsignal (M) in Form eines Hüllkurvensignals gebildet wird und beim Auftreten des Meßsignals (M) innerhalb eines oberen Schwellwertes (W1) unterhalb eines Zeitmittels des Spitzenwerts des Hochfrequenzsignals (RF) und eines unteren Schwellwertes (W2) größer als Null über einen ein vorbestimmtes Zeitintervall überschreitenden Zeitbereich die Fehlerursache, z.B. Fingerabdruck, ermittelt ist und in einem zweiten Verfahrensschritt signalisiert wird.

2. Verfahren nach Anspruch 1, dadurch gekennzeichnet, daß der obere Schwellwert (W1) einem Pegel von 90 % und der untere Schwellwert (W2) einem Pegel von 10 % des Zeitmittels des Spitzenwertes des ungestörten Hochfrequenzsignals (RF) entspricht.

3. Verfahren nach einem der Ansprüche 1 oder 2, dadurch gekennzeichnet, daß mindestens eine Fehlerursache visuell und/oder akustisch über den unmittelbaren Zeitraum ihres Auftretens hinausgehend bis zum erneuten Einlegen einer optischen Platte oder eines Magazins optischer Platten signalisiert wird.

4. Gerät zum Signalisieren von mindestens einer Fehlerursache optisch abtastbarer Informationsträger beziehungsweise optischer Platten, wie beispielsweise Fingerabdrücke und/oder Kratzer mit
- einem Detektor (7) zur Wiedergabe des Hochfrequenzsignals (RF) vom Aufzeichnungsträger,
- einem Fehlerdetektor (3) mit
- einem ersten Hüllkurvendetektor mit einer ersten Zeitkonstanten, mit einem Eingang zur Aufnahme des Hochfrequenzsignals, das vom Aufzeichnungsträger wiedergegeben wird und einem Ausgang, der ein der Amplitude des Hochfrequenzsignals (RF) entsprechendes Meßsignal (M) in Form eines Hüllkurvensignals bereitstellt,
- einem zweiten Hüllkurvendetektor mit einer zweiten Zeitkonstanten, wobei die zweite zeitkonstante im Vergleich zur ersten Zeitkonstanten lang ist, mit einem Eingang zur Aufnahme des genannten Hochfrequenzsignals (RF) und einem Ausgang (W1,W2), der einen Schwellwert unterhalb eines Zeitmittels des Spitzenwerts des Hochfrequenzsignals als dynamisches Schwellwertsignal bereitstellt,
- einem Komparator (V1,V2,G), der mit den Ausgängen (W1,W2) der Hüllkurvendetektoren verbunden ist und an seinem Ausgang einen Signalpegel ausgibt, wenn das Meßsignal (M) größer als Null bzw. kleiner als das dynamische Schwellwertsignal ist,
- einem Zeitdauerdetektor (D4,C4,S4), der an den Komparator (V1,V2,G) angeschlossen ist, mit einem Ausgang, der einen Zustand ausgibt, wenn der Signalpegel des Komparators (V1,V2,G) für einen vorgegebenen Mindestzeitraum vorliegt und mit
- einer Anzeigeeinrichtung (4), die am Zeitdauerdetektor angeschlossen ist, und das Vorhandensein von vom Benutzer behebbaren Fehlern auf dem Aufzeichnungsträger signalisiert.

5. Gerät nach Anspruch 4, dadurch gekennzeichnet, daß der zweite Hüllkurvendetektor aus zwei entgegengesetzt gerichteten ersten Spitzenwertgleichrichtern (D1, C1, S1; D2, C2, S2) besteht, die über einen Spannungsteiler (R1, R2, R3) miteinander verbunden sind, an dem zwei erste Komparatoren (V1, V2) angeschlossen sind, die ausgangsseitig mit den Eingängen eines Gatters (G) und eingangsseitig mit dem das Meßsignal (M) aus dem Hochfrequenzsignal (RF) bereitstellenden ersten Hüllkurvendetektor verbunden sind, der aus einem zweiten Spitzenwertgleichrichter (D3, C3, S3) besteht.

6. Gerät nach Anspruch 5, dadurch gekennzeichnet, daß die Spitzenwertgleichrichter (D1, C1, S1; D2, C2, S2; D3, C3, S3) jeweils aus einer Diode (D1, D2, D3), einem Kondensator (C1, C2, C3) und einer Konstantstromquelle (S1, S2, S3) bestehen und die ersten Spitzenwertgleichrichter (D1, C1, S1; D2, C2, S2) eine wesentlich größere Zeitkonstante gegenüber dem zweiten Spitzenwertgleichrichter (D3, C3, S3) aufweisen.

7. Gerät nach Anspruch 6, dadurch gekennzeichnet, daß die Zeitkonstanten, insbesondere zum Ermitteln der Fehlerursache beim Abspielen mit erhöhter Geschwindigkeit, umschaltbar sind.

8. Gerät nach Anspruch 4, dadurch gekennzeichnet, daß der Zeitdauerdetektor ein von einer Diode (D4), einem Kondensator (C4) und einer Konstantstromquelle (S4) gebildeter Integrator mit nachgeschaltetem Komparator (V3) ist und zur über den Zeitraum des Auftretens einer Fehlerursache hinausgehenden Anzeige ein Monoflop (F) und/oder ein rückstellbarer Speicher vorgesehen ist.

9. Gerät nach Anspruch 4 dadurch gekennzeichnet, daß die Anzeigevorrichtung (4) eine visuell und/oder akustisch signalisierende Anzeigeeinrichtung ist, die reparable und/oder irreparable Fehlerursachen signalisiert und mit der Verarbeitungsschaltung (3) ein separates Fehleranzeigegerät (5) oder mit dem Abspielgerät (1) eine bauliche Einheit (6) bildet.

## Claims

1. Method of signalling at least one of the causes of defects of optically scannable information carriers or optical discs, such as finger prints and/or scratches for example, wherein, in a first step of the method, a specific anomaly in the high frequency signal being reproduced is determined in that, in a play-back apparatus (1) that is usually used for reproducing the information from a compact disc, at least one cause of a defect e.g. a finger print [sic], a test signal (M) in the form of an envelope signal corresponding to the amplitude of the high frequency signal (RF) is formed from a high frequency signal (RF) detected from the optical information carrier by the play-back device (1), and the cause of the defect e.g. a finger print is established from the occurrence of the test signal (M), within an upper threshold value (W1) that lies below a time averaged peak value of the high frequency signal (RF) and a lower threshold value (W2) that is greater than zero, over a time span exceeding a predetermined time interval and this is then signalled in a second method step.

2. Method in accordance with Claim 1, characterised in that, the upper threshold value (W1) corresponds to a level of 90 %, and the lower threshold value (W2) to a level of 10%, of the time averaged peak value of the undistorted high frequency signal (RF).

3. Method in accordance with either of Claims 1 or 2, characterised in that, at least one cause of a defect is visually and/or acoustically signalled for a time exceeding the immediate period of its occurrence until an optical disc or a magazine of optical discs is inserted anew.

4. Apparatus for signalling at least one of the causes of defects of optically scannable information carriers or optical discs, such as finger prints and/or scratches for example, comprising
- a detector (7) for reproducing the high frequency signal (RF) from the recording medium,
- an error detector (3) including
- a first envelope detector having a first time constant and comprising an input for receiving the high frequency signal which is being reproduced from the recording medium and an output that provides a test signal (M) corresponding to the amplitude of the high frequency signal (RF) in the form of an envelope signal,
- a second envelope detector having a second time constant wherein the second time constant is long in comparison with the first time constant, and comprising an input for receiving said high frequency signal (RF) and an output (W1, W2) which provides a threshold value that is below a time averaged peak value of the high frequency signal in the form of a dynamic threshold value signal,
- a comparator (V1, V2, G) which is connected to the outputs (W1, W2) of the envelope detectors and produces a signal level at its output if the test signal (M) is greater than zero or smaller than the dynamic threshold value signal,
- a time duration detector (D4, C4, S4) which is connected to the comparator (V1, V2, G) and which has an output that produces one state if the signal level of the comparator (V1, V2, G) is present for a minimum predetermined period of time and including
- an indicator device (4) which is connected to the time duration detector and signals the presence of defects on the recording medium that are rectifiable by the user.

5. Apparatus in accordance with Claim 4, characterised in that, the second envelope detector consists of two oppositely poled first peak rectifiers (D1, C1, S1; D2, C2, S2) which are connected together via a voltage divider (R1, R2, R3) to which two first comparators (V1, V2) are connected, said comparators being connected on their output side to the inputs of a gate (G) and on their input side to the first envelope detector which is producing the test signal (M) from the high frequency signal (RF) and which consists of a second peak rectifier (D3, C3, S3).

6. Apparatus in accordance with Claim 5, characterised in that, the peak rectifiers (D1, C1, S1; D2, C2, S2; D3, C3, S3) each consist of a diode (D1, D2, D3), a capacitor (C1, C2, C3) and a constant current source (S1, S2, S3) and the first peak rectifiers (D1, C1, S1; D2, C2, S2) have a substantially greater time constant vis a vis the second peak rectifier (D3, C3, S3).

7. Apparatus in accordance with Claim 6, characterised in that, the time constants are switchable, especially for establishing the causes of defects when playing back at higher speeds.

8. Apparatus in accordance with Claim 4, characterised in that, the time duration detector is an integrator formed by a diode (D4), a capacitor (C4) and a constant current source (S4) and includes a subsequently connected comparator (V3), and there is provided a mono-flop (F) and/or a resettable store for the purposes of indicating the cause of a defect for a period of time exceeding that of its occurrence.

9. Apparatus in accordance with Claim 4, characterised in that, the indicator device (4) is an indicator unit that provides signals in a visual and/or acoustic manner, said unit signalling repairable and/or irrepairable causes of defects and forming a separate defect-indicating apparatus (5) in combination with the processing circuit (3) or being a built-in unit (6) in the play-back apparatus (1).

## Revendications

1. Procédé de signalisation d'au moins une cause de défaut d'un support d'information analysable optiquement ou de disques optiques, par exemple des empreintes digitales et/ou des rayures,
où, dans une première étape du processus une anomalie particulière est constatée dans le signal radioélectrique reproduit:
dans un appareil de lecture (1), utilisé couramment pour la lecture des informations d'un disque compact, à partir d'un signal radioélectrique (RF) du support d'information optique détecté par l'appareil de lecture (1), un signal de mesure (M) correspondant à l'amplitude du signal radioélectrique (RF) est produit sous la forme d'un signal d'enveloppe
et lorsque le signal de mesure (M) entre entre une valeur de seuil supérieure (W1) inférieure à une moyenne temporelle de la valeur de crête du signal radioélectrique (RF) et une valeur de seuil inférieure (W2) supérieure à 0 pendant une plage de temps dépassant un intervalle de temps prédéfini, la cause du défaut (par exemple empreinte digitale) est détectée et dans une deuxième étape du processus elle est signalée.

2. Procédé d'après la revendication 1, caractérisé en ce que la valeur de seuil supérieure (W1) correspond à un niveau de 90 % et la valeur seuil inférieure (W2) à un niveau de 10 % de la moyenne temporelle de la valeur de crête du signal radioélectrique (RF) non perturbé.

3. Procédé d'après une des revendications 1 ou 2, caractérisé en ce que au moins une cause de défaut est signalée visuellement et/ou de façon sonore sur la période suivant directement son apparition, jusqu'à la nouvelle mise en place d'un disque optique ou d'un magasin de disques optiques.

4. Appareil de signalisation d'au moins une cause de défaut d'un support d'information analysable optiquement ou de disques optiques, par exemple des empreintes digitales et/ou des rayures avec
. un détecteur (7) pour la reproduction du signal radioélectrique (RF) du support d'enregistrement
. un détecteur de défaut (3) avec
. un premier détecteur d'enveloppe avec une première constante de temps, ayant une entrée pour la réception du signal radioélectrique reproduit par le support d'enregistrement et une sortie mettant à disposition sous la forme d'un signal d'enveloppe un signal de mesure (M) correspondant à l'amplitude du signal radioélectrique (RF)
. un deuxième détecteur d'enveloppe avec une deuxième constante de temps, longue comparée à la première constante de temps, ayant une entrée pour la réception du dit signal radioélectrique (RF) et une sortie (W1, W2) mettant à disposition une valeur de seuil inférieure à une moyenne temporelle de la valeur de crête du signal radioélectrique sous la forme d'un signal de seuil dynamique
. un comparateur (V1, V2, G) relié aux sorties (w1, w2) du détecteur d'enveloppe et qui produit un niveau de signal à sa sortie, lorsque le signal de mesure (M) est supérieur à zéro ou inférieur au signal de seuil dynamique
. un détecteur de durée (D4, C4, S4) relié au comparateur (V1, V2, G), ayant une sortie produisant un état lorsque le niveau de signal du comparateur (V1, V2, G) existe pour une période de temps minimale prédéfinie et avec
. un dispositif d'indication (4) relié au détecteur de durée signalant la présence sur le support d'enregistrement de défauts pouvant être corrigés par l'utilisateur.

5. Appareil d'après la revendication 4, caractérisé en ce que le deuxième détecteur d'enveloppe se compose de deux premiers redresseurs de valeur de crête dirigés à l'opposé l'un de l'autre (D1, C1, S1 ; D2, C2, S2), qui sont reliés l'un à l'autre par un diviseur de tension (R1, R2, R3) auquel deux premiers comparateurs (V1, V2) sont connectés, reliés côté sortie aux entrées d'un circuit combinatoire (G) et côté entrée au premier détecteur d'enveloppe produisant le signal de mesure (M) à partir du signal radioélectrique (RF), le premier détecteur d'enveloppe étant lui même composé d'un deuxième redresseur de valeur de crête (D3, C3, S3).

6. Appareil d'après la revendication 5, caractérisé en ce que les redresseurs de valeur de crête (D1, C1, S1 ; D2, C2, S2 ; D3, C3, S3) sont chacun composé d'une diode (D1, D2, D3), d'un condensateur (C1, C2, C3) et d'une source de courant constant (S1, S2, S3). Les premiers redresseurs de valeur de crête (D1, C1, S1 ; D2, C2, S2) présentent en outre une constante de temps bien plus grande que le deuxième redresseur de valeur de crête (D3, C3, S3).

7. Appareil d'après la revendication 6, caractérisé en ce que les constantes de temps, en particulier pour la détection de la cause du défaut lors de la lecture à vitesse élevée, sont commutables.

8. Appareil d'après la revendication 4, caractérisé en ce que
- le détecteur de durée est un intégrateur avec comparateur (V3) intercalé à la suite, formé d'une diode (D4), d'un condensateur (C4), et d'une source de courant constant (S4)
- pour l'indication sur la période débutant à l'apparition d'une cause de défaut, une bascule monostable (F) et/ou une mémoire réinitialisable sont prévues.

9. Appareil d'après la revendication 4, caractérisé en ce que le dispositif d'indication (4) est un dispositif de signalisation visuelle et/ou sonore qui signale des causes de défaut réparables et/ou irréparables et forme avec le circuit de traitement (3) un appareil de signalisation de défauts (5) séparé ou avec l'appareil de lecture (1) une unité de construction (6).
